# FASCICULE DE BREVET EUROPEEN

(11) **EP 0 451 051 B1**
(45) Date de publication et mention de la délivrance du brevet: **07.12.1994**
(21) Numéro de dépôt: 91400901.4
(22) Date de dépôt: 03.04.1991
(51) Int. Cl.: H05H 1/42, B23K 35/38, C01B 3/00

(54) **Gaz plasmagène et application de ce gaz à la projection plasma d'oxyde métallique**
Plasmagas und seine Verwendung zum Plasmaspritzen von metallischem Oxyd
Plasma gas and its use for metallic oxide plasma spraying

(30) Priorité: 04.04.1990 FR 9004307
(43) Date de publication de la demande: 09.10.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Nicoud, Daniel, F-57000 Metz (FR); Léger, Jean-Martial, F-95540 Méry sur Oise (FR); Fauchais, Pierre, F-87000 Limoges (FR); Grimaud, Alain, F-87000 Limoges (FR)
(74) Mandataire: Le Moenner, Gabriel

(56) Documents cités:
- DE-A- 1 900 593
- FR-A- 2 251 153
- FR-A- 2 639 346
- US-A- 3 630 770
- US-A- 3 658 572

## Description

La présente invention est relative aux gaz plasmagènes, et notamment aux techniques de projection plasma.

La projection plasma est un procédé de revêtement thermique qui consiste à introduire un matériau particulaire dans un jet plasma où les particules sont fondues et accélérées avant qu'elles ne viennent s'écraser sur la surface de la pièce à revêtir. Les applications principales sont la réalisation de dépôts anti-usure, anti-corrosion, anti-friction ou remplissant le rôle de barrière thermique et/ou électrique.

L'opération s'effectue soit à l'air ambiant (procédé APS), soit dans une enceinte contenant un gaz neutre (procédé LPPS en basse pression, IPS en atmosphère contrôlée, ATC sous atmosphère et température contrôlées).

La maîtrise des paramètres de la projection plasma est délicate, car la qualité et la vitesse de dépôt dépendent fortement de l'état de fusion des particules lors de l'impact. Il est ainsi indispensable de fondre entièrement les particules mais en évitant leur vaporisation. Il est donc nécessaire de maîtriser à la fois la conductivité thermique du jet plasma et le temps de séjour des particules dans celui-ci, ce temps étant en particulier fonction de la longueur du jet plasma.

On connaît déjà des gaz plasmagènes constitués d'un mélange binaire d'argon et d'hydrogène (typiquement de 75 à 95% en volume d'argon et de 5 à 25% en volume d'hydrogène), ainsi que d'argon et d'hélium.

Il a aussi été proposé, pour une autre application, dans le document FR-A-2,251,153, un gaz plasmagène constitué d'un mélange ternaire d'hélium, d'argon et d'hydrogène, pour le soudage plasma ou encore pour servir de gaz protecteur pour le soudage utilisant une électrode réfractaire, l'hydrogène intervenant en très faible quantité dans le mélange (0,1% à 1%) pour éviter l'oxydation des électrode.

La présente invention a pour but de proposer un gaz plasmagène permettant l'obtention d'un jet plasma plus homogène sur une plus grande longueur de jet, c'est-à-dire un jet présentant un gradient thermique transversal moins dégradé sur les bords du jet et ce, sur une longueur plus importante en sortie de torche.

Pour ce faire, selon une caractéristique de l'invention, le gaz plasmagène est constitué d'un mélange ternaire d'hélium, d'argon et d'hydrogène, contenant au moins 10% d'hydrogène et typiquement au moins 30% d'hélium.

L'invention a également pour objet un procédé de projection plasma d'un matériau particulaire, caractérisé en ce qu'on utilise un gaz plasmagène tel que défini ci-dessus, le matériau particulaire étant métallique, typiquement un oxyde métallique.

Un tel mélange ternaire appliqué à la projection plasma présente, par rapport aux mélanges binaires argon-hydrogène, un rendement (en pourcentage de poudre effectivement déposée par rapport à la quantité de poudre injectée) considérablement amélioré, dépassant 60% et pouvant atteindre 70% et plus.

Par rapport aux mélanges binaires hélium-argon, le mélange ternaire selon l'invention confère au jet plasma une meilleure conductivité thermique, ce qui permet, pour un coût énergétique moindre, un meilleur échauffement des particules, donc une vitesse de dépôt augmentée en obtenant une meilleure fusion/adhésion du dépôt sur la pièce à recouvrir et une surface de recouvrement élargie et plus homogène.

Par ailleurs, avec un tel mélange ternaire, le jet de plasma est moins sujet au phénomène de pompage avec l'atmosphère ambiante, ce qui facilite son utilisation dans les procédés APS.

Le procédé selon l'invention permet de maîtriser à la fois la conductivité thermique du plasma, et donc la vitesse d'échauffement des particules, et la viscosité dynamique du plasma à laquelle sont liées les dimensions du jet plasma.

Le procédé selon l'invention permet, pour certains dépôts, d'obtenir de façon relativement économique et, pour une large gamme d'utilisations, des dépôts ayant une cohésion mécanique améliorée et présentant notamment un "cordon" de dépôt plus étalé, le dépôt présentant une compacité, une dureté et une adhésion améliorées, ainsi qu'une porosité réduite.

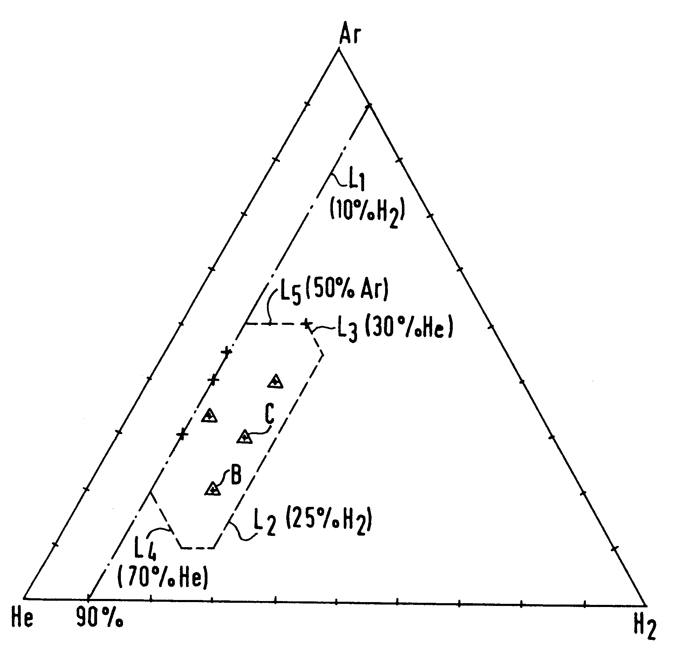

On a représenté sur le diagramme de la figure unique les plages et compositions préférées du gaz plasmagène selon l'invention.

On a constaté expérimentalement, comme figuré par les compositions représentées par des croix, que l'ensemble des avantages marquants énoncés ci-dessus était obtenu pour un pourcentage volumique d'hydrogène supérieur à 8% du volume du gaz, de préférence supérieur à 10% (ligne L₁), et pour une teneur en argon inférieure à 50% (ligne L₅).

Les compositions donnant les meilleurs résultats expérimentaux sont représentées par les points inscrits dans un triangle, c'est-à-dire pour une teneur en hydrogène inférieure à 25 % (ligne L₂), de préférence d'environ 20 % (± 5 %), et pour une teneur en hélium supérieure à 30 % (ligne L₃).

Ainsi, les plages de composition du mélange ternaire sont de 30 à 70 % d'hélium, de 10 à 50 % d'argon et de 10 à 25 % d'hydrogène, plus particulièrement de 35 à 65 % d'hélium, de 20 à 45 % d'argon et de 10 à 25 % d'hydrogène, typiquement de 35 à 60 % d'hélium, de 20 à 40 % d'argon et de 10 à 25 % d'hydrogène. Plus spécifiquement, la teneur en hélium est avantageusement de 50 % (± 5 %).

La composition préférée, compte tenu de la durée de vie des torches à plasma actuellement disponibles, est celle, figurée C, contenant 50 % d'hélium, 30 % d'argon et 20 % d'hydrogène. Elle permet d'obtenir des rendements de poudre notablement améliorés, atteignant 70 %, notamment avec l'alumine.

La composition B (60 % d'hélium, 20 % d'argon et 20 % d'hydrogène) offre également d'excellents résultats mais à la limite d'utilisation en continu avec les torches à plasma existantes. Avec les futures générations de torches à plasma, il est vraisemblable que des compositions améliorées incorporant jusqu'à 70 % d'hélium (ligne L₄) et de 20 à 25 % d'hydrogène pourront être industriellement utilisées.

Le procédé selon l'invention trouve son application privilégiée pour le dépôt d'oxydes métalliques tels que l'alumine, la zircone, la zircone yttriée (ZrO₂Y₂O₃), la silice Cr₂O₃ (notamment pour des organes de freinage), les super-alliages du type MCrAlY, NiAl, les supra-conducteurs du type YBaCuO, ou l'hydroxyapatite (pour les prothèses implantables).

Quoique la présente invention ait été décrite en relation avec des modes de réalisation particuliers, elle ne s'en trouve pas limitée mais est au contraire susceptible de modifications et de variantes qui apparaîtront à l'homme de l'art, en particulier dans les domaines du soudage et du traitement thermique de surfaces.

## Revendications

1. Gaz plasmagène constitué d'un mélange ternaire d'hélium, d'argon et d'hydrogène, caractérisé en ce qu'il contient au moins 10% en volume d'hydrogène.

2. Gas plasmagène selon la revendication 1, caractérisé en ce qu'il contient au moins 30% en volume d'hélium.

3. Gaz plasmagène selon la revendication 2, caractérisé en ce qu'il contient :
- de 30 à 70% d'hélium,
- de 10 à 50% d'argon,
- de 10 à 25% d'hydrogène.

4. Gaz plasmagène selon la revendication 3, caractérisé en ce qu'il contient :
- de 35 à 65% d'hélium,
- de 20 à 45% d'argon,
- de 10 à 25% d'hydrogène.

5. Gaz plasmagène selon la revendication 4, caractérisé en ce qu'il contient :
- de 35 à 60% d'hélium,
- de 20 à 40% d'argon,
- de 10 à 25% d'hydrogène.

6. Gaz plasmagène selon la revendication 5, caractérisé en ce qu'il contient 20% (± 5%) d'hydrogène.

7. Gaz plasmagène selon la revendication 6, caractérisé en ce qu'il contient 50% (± 5%) d'hélium.

8. Application du gaz plasmagène selon l'une des revendications précédentes à la projection plasma d'au moins une poudre métallique.

## Patentansprüche

1. Plasmafähiges Gas, das aus einem ternären Gemisch aus Helium, Argon und Wasserstoff besteht, dadurch gekennzeichnet, daß es zumindest 10 Volumenprozent Wasserstoff enthält.

2. Plasmafähiges Gas nach Anspruch 1, dadurch gekennzeichnet, daß es zumindest 30 Volumenprozent Helium enthält.

3. Plasmafähiges Gas nach Anspruch 2, dadurch gekennzeichnet, daß es
- 30 bis 70 % Helium,
- 10 bis 50 % Argon,
- 10 bis 25 % Wasserstoff
enthält.

4. Plasmafähiges Gas nach Anspruch 3, dadurch gekennzeichnet, daß es
- 35 bis 65 % Helium,
- 20 bis 45 % Argon,
- 10 bis 25 % Wasserstoff
enthält.

5. Plasmafähiges Gas nach Anspruch 4, dadurch gekennzeichnet, daß es
- 35 bis 60 % Helium,
- 20 bis 40 % Argon,
- 10 bis 25 % Wasserstoff
enthält.

6. Plasmafähiges Gas nach Anspruch 5, dadurch gekennzeichnet, daß es 20 % (± 5 %) Wasserstoff enthält.

7. Plasmafähiges Gas nach Anspruch 6, dadurch gekennzeichnet, daß es 50 % (± 5 %) Helium enthält.

8. Verwendung des plasmafähigen Gases nach einem der vorangehenden Ansprüche zum Plasmazerstäuben von zumindest einem Metallpulver.

## Claims

1. Plasma-producing gas consisting of a ternary mixture of helium, argon and hydrogen, characterised in that it contains at least 10% hydrogen by volume.

2. Plasma-producing gas according to Claim 1, characterised in that it contains at least 30% helium by volume.

3. Plasma-producing gas according to Claim 2, characterised in that it contains:
- 30 to 70% helium,
- 10 to 50% argon,
- 10 to 25% hydrogen.

4. Plasma-producing gas according to Claim 3, characterised in that it contains:
- 35 to 65% helium,
- 20 to 45% argon,
- 10 to 25% hydrogen.

5. Plasma-producing gas according to Claim 4, characterised in that it contains:
- 35 to 60% helium,
- 20 to 40% argon,
- 10 to 25% hydrogen.

6. Plasma-producing gas according to Claim 5, characterised in that it contains 20% (± 5%) hydrogen.

7. Plasma-producing gas according to Claim 6, characterised in that it contains 50% (± 5%) helium.

8. Application of the plasma-producing gas according to one of the preceding claims to the plasma spraying of at least one metal powder.
